# EUROPEAN PATENT APPLICATION

(11) **EP 4 814 760 A1**
(43) Date of publication of application: **30.09.2026**
(21) Application number: 25191862.9
(22) Date of filing: 25.07.2025
(51) Int. Cl.: G06F 21/44, G03G 21/18

(54) **INFORMATION PROCESSING SYSTEM, PROGRAM, AND INFORMATION PROCESSING METHOD**

(30) Priority: 24.03.2025 JP 2025048588
(71) Applicant: FUJIFILM Business Innovation Corp., Minato-ku Tokyo (JP)
(72) Inventor: FUNAKI, Shota, Yokohama-shi, Kanagawa (JP)
(74) Representative: Becker Kurig & Partner Patentanwälte mbB

(57) **Abstract**

An information processing system includes a processor configured to acquire device information of a device connected to the information processing system; acquire device information recorded in a recording unit included in a mounted consumable item; and permit use of the consumable item in a case where the device information recorded in the recording unit included in the consumable item matches the device information of the device connected to the information processing system.

## Description

### BACKGROUND OF THE INVENTION

### (i) Field of the Invention

The present disclosure relates to an information processing system, a program, and an information processing method.

### (ii) Description of Related Art

JP2017-064962A discloses an authentication apparatus that prevents deterioration in printing quality or device failure by allowing authentication of only appropriate consumable items.

### SUMMARY OF THE INVENTION

An object of the present disclosure is to provide an information processing system, a program, and an information processing method capable of preventing unauthorized use of a mounted consumable item.

According to a first aspect of the present disclosure, there is provided an information processing system including a processor configured to: acquire device information of a device connected to the information processing system; acquire device information recorded in a recording unit included in a mounted consumable item; and permit use of the consumable item in a case where the device information recorded in the recording unit included in the consumable item matches the device information of the device connected to the information processing system.

An information processing system according to a second aspect of the present disclosure is the information processing system according to the first aspect, in which the processor may be configured to: prohibit the use of the consumable item in a case where the device information recorded in the recording unit included in the consumable item does not match the device information of the device connected to the information processing system.

An information processing system according to a third aspect of the present disclosure is the information processing system according to the first aspect or the second aspect, in which the processor may be configured to, in a case where a plurality of pieces of the device information are recorded in the recording unit included in the consumable item, permit the use of the consumable item in a case where at least one piece of the device information matches between a plurality of pieces of the device information recorded in the recording unit included in the consumable item and device information of a plurality of devices connected to the information processing system.

An information processing system according to a fourth aspect of the present disclosure is the information processing system according to the first or second aspect, in which the processor may be configured to, in a case where a plurality of pieces of the device information are recorded in the recording unit included in the consumable item, permit the use of the consumable item in a case where all of a plurality of pieces of the device information recorded in the recording unit included in the consumable item and device information of a plurality of devices connected to the information processing system match each other.

An information processing system according to a fifth aspect of the present disclosure is the information processing system according to any one of the first to fourth aspects, in which the processor may be configured to: record the device information of the device connected to the information processing system in the recording unit included in the consumable item by an operation of a manager user having authority to manage the consumable item.

An information processing system according to a sixth aspect of the present disclosure is the information processing system according to the fifth aspect, in which the processor may be configured to, in a case where a plurality of devices connected to the information processing system are present, record device information of a device selected by the manager user from among the plurality of devices connected to the information processing system in the recording unit included in the consumable item.

An information processing system according to a seventh aspect of the present disclosure is the information processing system according to the fifth aspect, in which the processor may be configured to, in a case where a plurality of devices connected to the information processing system are present, record device information of a device randomly selected from among the plurality of devices connected to the information processing system in the recording unit included in the consumable item.

An information processing system according to an eighth aspect of the present disclosure is the information processing system according to any one of the first to seventh aspects, in which the processor may be configured to acquire device information of an external device connected to the information processing system in a wired or wireless manner.

An information processing system according to a ninth aspect of the present disclosure is the information processing system according to the eighth aspect, in which the external device may be any device of a router apparatus, a beacon, a USB-connected device, or a personal computer.

According to a tenth aspect of the present disclosure, there is provided a program causing a computer to execute a process including: acquiring device information of a device connected to the information processing system; acquiring device information recorded in a recording unit included in a mounted consumable item; and permitting use of the consumable item in a case where the device information recorded in the recording unit included in the consumable item matches the device information of the device connected to the information processing system.
According to an eleventh aspect of the present disclosure, there is provided an information processing method including: acquiring device information of a device connected to the information processing system; acquiring device information recorded in a recording unit included in a mounted consumable item; and permitting use of the consumable item in a case where the device information recorded in the recording unit included in the consumable item matches the device information of the device connected to the information processing system.

According to the information processing system of the first aspect of the present disclosure, it is possible to prevent the unauthorized use of the mounted consumable item.

According to the information processing system of the second aspect of the present disclosure, it is possible to prevent the unauthorized use of the mounted consumable item.

According to the information processing system of the third aspect of the present disclosure, it is possible to easily permit the use of the consumable item in a case where all of the plurality of pieces of device information recorded in the recording unit included in the consumable item and the device information of the plurality of devices connected to the information processing system match each other, as compared with a case where the use of the consumable item is permitted.

According to the information processing system of the fourth aspect of the present disclosure, it is possible to improve the reliability of preventing the unauthorized use, as compared with a case where the use of the consumable item is permitted in a case where at least one or more pieces of device information match between the plurality of pieces of device information recorded in the recording unit included in the consumable item and the device information of the plurality of pieces of device connected to the information processing system.

According to the information processing system of the fifth aspect of the present disclosure, the consumable item can be made to correspond to the information processing system.

According to the information processing system of the sixth aspect of the present disclosure, it is possible to easily permit the use of the consumable item, as compared with a case where the device information of the device randomly selected from the plurality of devices connected to the information processing system is recorded in the recording unit included in the consumable item.

According to the information processing system of the seventh aspect of the present disclosure, it is possible to improve the reliability of preventing the unauthorized use, as compared with a case where the recording unit included in the consumable item records the device information of the device selected by the user from among the plurality of devices connected to the information processing system.

According to the information processing system of the eighth aspect of the present disclosure, it is possible to prevent the unauthorized use of the mounted consumable item by using a peripheral device on which the information processing system is mounted.

According to the information processing system of the ninth aspect of the present disclosure, it is possible to prevent the unauthorized use of the mounted consumable item by using a device possessed by the user.

According to the program of the tenth aspect of the present disclosure, it is possible to prevent the unauthorized use of the mounted consumable item.
According to the information processing method of the eleventh aspect of the present disclosure, it is possible to prevent the unauthorized use of the mounted consumable item.

### BRIEF DESCRIPTION OF THE DRAWINGS

Exemplary embodiment(s) of the present invention will be described in detail based on the following figures, wherein:
FIG. 1 is an external view of an image forming apparatus of one exemplary embodiment of the present disclosure;
FIG. 2 is a block diagram showing a hardware configuration of the image forming apparatus;
FIG. 3 is a block diagram showing a hardware configuration of consumable items used in the image forming apparatus;
FIG. 4 is a diagram for describing a determination process of usage permission of consumable items in the image forming apparatus;
FIG. 5 is a diagram for describing the determination process of usage permission of consumable items in the image forming apparatus;
FIG. 6 is a flowchart showing an example of a flow of a process in a case where device information is recorded in a memory included in consumable items via the image forming apparatus; and
FIG. 7 is a flowchart showing an example of a flow of the determination process of usage permission of consumable items in the image forming apparatus.

### DETAILED DESCRIPTION OF THE INVENTION

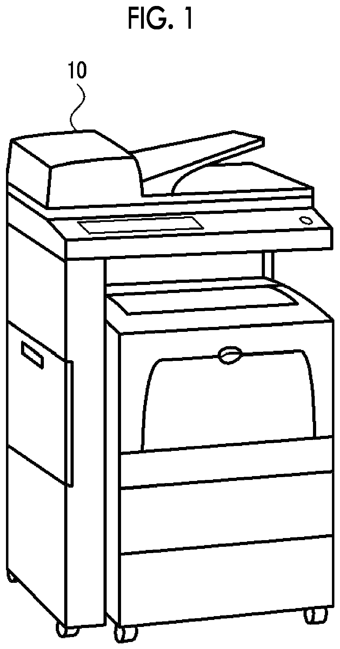

Hereinafter, an exemplary embodiment for embodying the technique of the present disclosure will be described in detail with reference to the drawings. FIG. 1 is an external view of an image forming apparatus according to an exemplary embodiment.

The image forming apparatus 10 shown in FIG. 1 is a so-called multifunctional apparatus including a plurality of functions such as a copy function, a print function, a fax function, and a scan function. The image forming apparatus 10 is an example of an information processing system in the technology of the present disclosure.

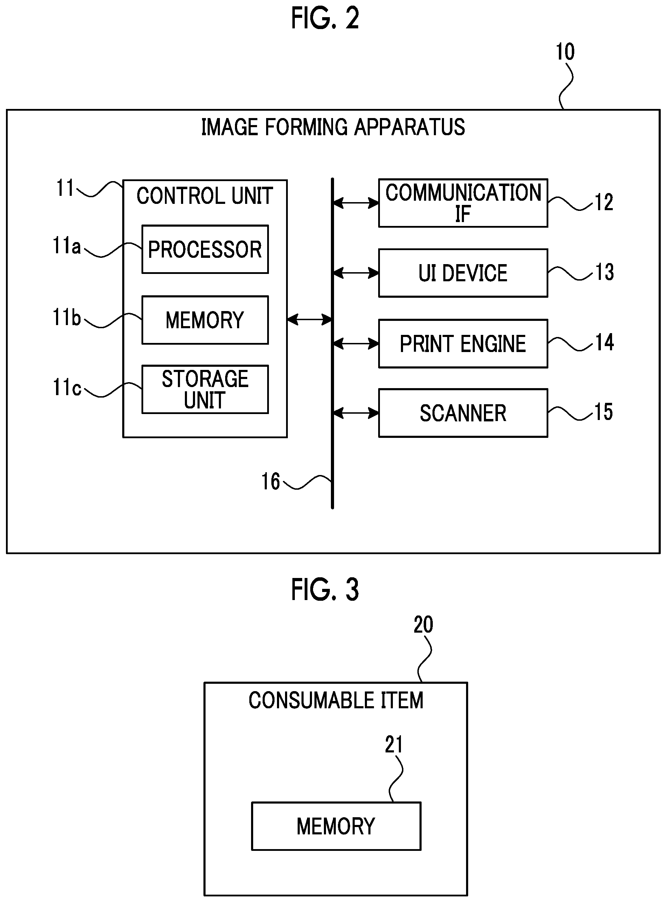

Next, a hardware configuration of the image forming apparatus 10 according to the present exemplary embodiment will be described. FIG. 2 is a block diagram showing a hardware configuration of the image forming apparatus 10.

As shown in FIG. 2, the image forming apparatus 10 includes a control unit 11, a communication interface (hereinafter, abbreviated as communication IF) 12, a user interface device (hereinafter, abbreviated as UI device) 13, a print engine 14, and a scanner 15. These components are connected to each other via a control bus 16.

The control unit 11 includes a processor 11a, a memory 11b, and a storage unit 11c. The processor 11a executes predetermined processing based on a program read out from the storage unit 11c and developed in the memory 11b. The storage unit 11c is configured of, for example, a Read Only Memory (ROM), a Hard Disk Drive (HDD), or a Solid State Drive (SSD). Various programs, data, and the like are stored in the storage unit 11c.

In the present exemplary embodiment, the processor 11a is described as reading out and executing the program stored in the storage unit 11c, but the present disclosure is not limited thereto. The program may be provided in a form recorded on a recording medium readable by a computer as described above. In addition, the program may be acquired from an external apparatus via a communication line.

The communication IF 12 transmits and receives data to and from an external device or the like. The UI device 13 is, for example, a device for the user to receive or input information, such as a touch panel and/or a button. The print engine 14 prints an image on a recording medium such as printing paper through steps such as charging, exposure, development, transfer, and fixing. The scanner 15 reads a document loaded into the image forming apparatus 10 and outputs the document as image data in a set image format.

In the image forming apparatus 10, a consumable item such as a toner cartridge that can be attached to and detached from a main body is used. Therefore, it is conceivable that the consumable item mounted on the image forming apparatus 10, for example, during a lease contract, is taken out in unauthorized manner and used on another image forming apparatus in unauthorized manner.

In order to eliminate such a problem, as shown in FIG. 3, the consumable item 20 used in the image forming apparatus 10 of the present exemplary embodiment includes a memory 21. In the memory 21, device information of a device that may be connected to the image forming apparatus 10 is recorded in advance. The memory 21 is an example of a recording unit in the technology of the present disclosure.

In addition, the control unit 11 acquires device information of a device connected to the image forming apparatus 10, acquires device information recorded in the memory 21 included in the consumable item 20, and permits the use of the consumable item 20 in a case where the device information recorded in the memory 21 included in the consumable item 20 and the device information of the device connected to the image forming apparatus 10 match.

Here, the device information is, for example, information for identifying an individual of the device, such as a serial number of the device or a service set identifier (SSID).

The control unit 11 may acquire device information of an external device connected to the image forming apparatus 10 in a wired or wireless manner. In addition, the control unit 11 may acquire device information of the external device directly connected to the image forming apparatus 10. Here, the external device may be, for example, any device of a router apparatus, a beacon, a USB-connected device, or a personal computer. The beacon means, for example, a device that transmits a wireless signal, such as a wireless tag or a Bluetooth (registered trademark) device.

Here, the determination process of the usage permission of the consumable item 20 in the image forming apparatus 10 of the present exemplary embodiment will be described in detail.

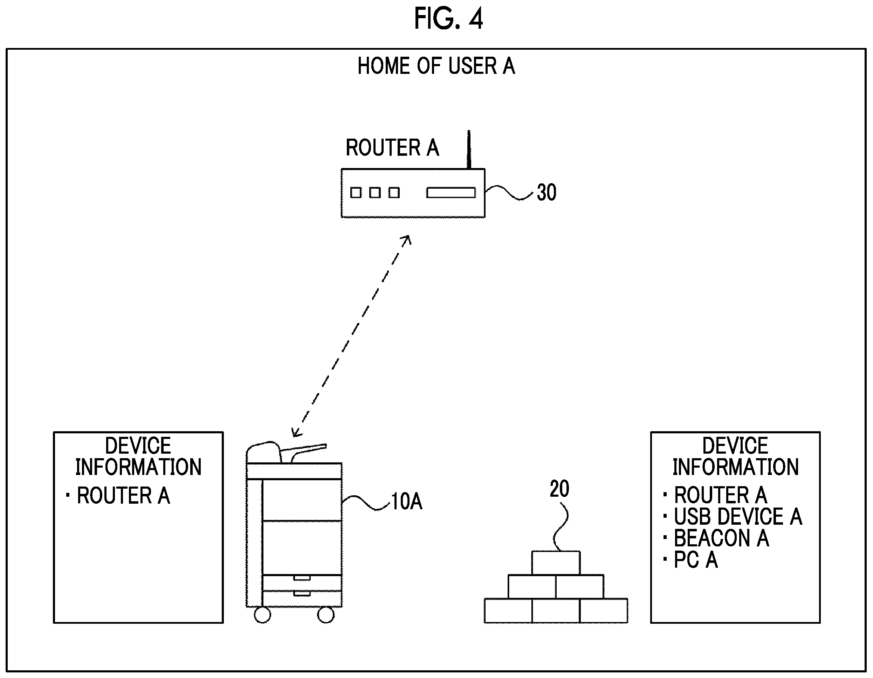

For example, as shown in FIG. 4, it is assumed that an image forming apparatus 10A is installed in a home of a user A to whom use is permitted, and the consumable item 20 is supplied. In addition, it is assumed that a router A30 is installed as an external device in the home of the user A. The image forming apparatus 10A is wirelessly connected to the router A30.

In the memory 21 of the consumable item 20, device information of "router A, USB device A, beacon A, and personal computer (abbreviated as PC in FIG. 4) A" is recorded in advance as the device information.

The control unit 11 of the image forming apparatus 10A acquires "router A" as the device information of the device connected to the image forming apparatus 10A.

Next, the control unit 11 acquires "router A, USB device A, beacon A, and personal computer A" as the device information from the memory 21 included in the consumable item 20 mounted in the image forming apparatus 10A.

Next, the control unit 11 determines whether or not the device information recorded in the memory 21 included in the consumable item 20 matches the device information of the device connected to the image forming apparatus 10. Here, since "router A" matches between the two, the control unit 11 permits the use of the consumable item 20.

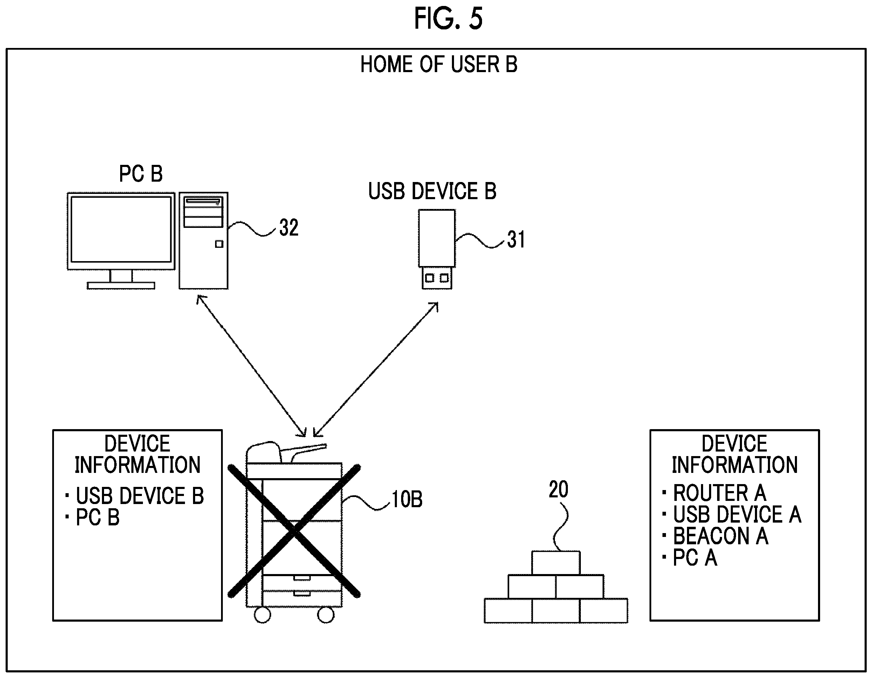

Next, as shown in FIG. 5, a case where the consumable item 20 is taken out from the home of the user A and used in an image forming apparatus 10B installed in the home of the user B to which the use is not permitted will be described.

It is assumed that a USB device B31 and a personal computer B32 are installed as external devices in the home of the user B. The image forming apparatus 10B is connected to the USB device B31 and the personal computer B32 in a wired manner.

The control unit 11 of the image forming apparatus 10B acquires "USB device B and personal computer B" as the device information of the device connected to the image forming apparatus 10B.

Next, the control unit 11 acquires "router A, USB device A, beacon A, and personal computer A" as the device information from the memory 21 included in the consumable item 20 mounted in the image forming apparatus 10B.

Next, the control unit 11 determines whether or not the device information recorded in the memory 21 included in the consumable item 20 matches the device information of the device connected to the image forming apparatus 10. Here, since the device information does not match at all between the two, the control unit 11 determines that the consumable item 20 is used in unauthorized manner.

Here, the control unit 11 may prohibit the use of the consumable item 20 in a case where the device information recorded in the memory 21 included in the consumable item 20 does not match the device information of the device connected to the image forming apparatus 10.

In addition, in a case where the device information recorded in the memory 21 provided in the consumable item 20 does not match the device information of the device connected to the image forming apparatus 10, the control unit 11 may issue a warning to the user. The control unit 11 may permit the use of the consumable item 20 after issuing the warning, or may issue the warning and further prohibit the use of the consumable item 20.

In addition, in a case where a plurality of pieces of device information are recorded in the memory 21 included in the consumable item 20, the control unit 11 may permit the use of the consumable item 20 in a case where at least one or more pieces of device information match between the plurality of pieces of device information recorded in the memory 21 included in the consumable item 20 and the device information of the plurality of devices connected to the image forming apparatus 10.

In addition, in a case where a plurality of pieces of device information are recorded in the memory 21 included in the consumable item 20, the control unit 11 may permit the use of the consumable item 20 in a case where all of the plurality of pieces of device information recorded in the memory 21 included in the consumable item 20 and the device information of the plurality of devices connected to the image forming apparatus 10 match each other.

In addition, the control unit 11 may record the device information of the device connected to the image forming apparatus 10 in the memory 21 included in the consumable item 20 by the operation of the manager user who has the authority to manage the consumable item 20.

In this case, in a case where there are a plurality of devices connected to the image forming apparatus 10, the control unit 11 may record the device information of the device selected by the manager user from among the plurality of devices connected to the image forming apparatus 10 in the memory 21 included in the consumable item 20. In addition, in a case where there are a plurality of devices connected to the image forming apparatus 10, the control unit 11 may record the device information of a device randomly selected from the plurality of devices connected to the image forming apparatus 10 in the memory 21 included in the consumable item 20.

The recording of the device information in the memory 21 included in the consumable item 20 is not limited to the aspect in which the manager user performs the recording via the image forming apparatus 10 as described above. For example, in a factory that manufactures the consumable item 20, the device information corresponding to the image forming apparatus 10 in which the consumable item 20 is assumed to be used may be recorded.

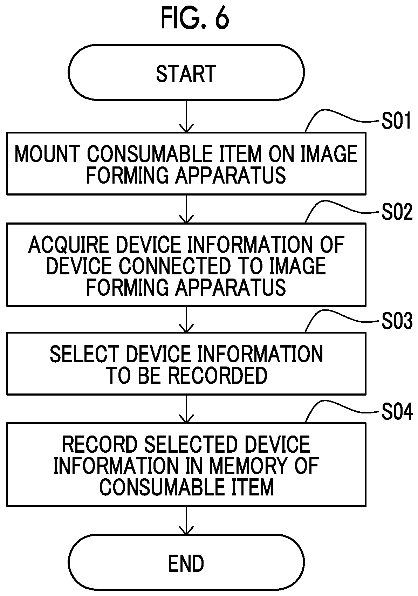

Next, a flow of the process in a case where the device information is recorded in the memory 21 included in the consumable item 20 via the image forming apparatus 10 will be described with reference to a flowchart shown in FIG. 6.

First, in step S01, the manager user mounts the consumable item 20 on the image forming apparatus 10.

Next, in step S02, the control unit 11 of the image forming apparatus 10 acquires the device information of the device connected to the image forming apparatus 10. Here, the control unit 11 may acquire not only the device information of the device connected to the image forming apparatus 10 but also the device information of the device that may be connected to the image forming apparatus 10.

Next, in step S03, the control unit 11 selects the device information to be recorded in the memory 21 included in the consumable item 20 from the acquired device information. Here, in a case where there are a plurality of pieces of acquired device information, the control unit 11 may record the device information of the device selected by the manager user, or may record the device information of the device randomly selected.

Next, in step S04, the control unit 11 records the selected device information in the memory 21 included in the consumable item 20, and ends the process.

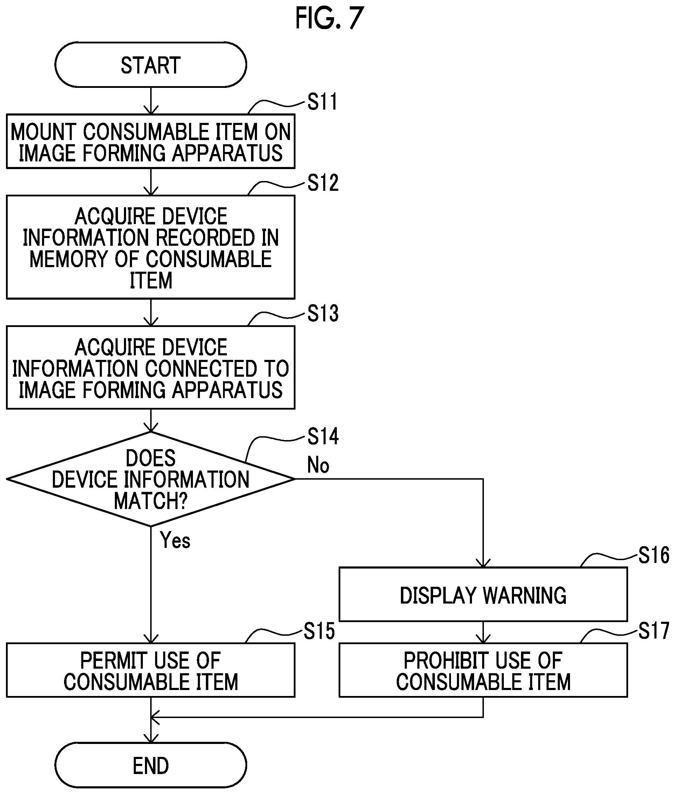

Next, a determination process of the usage permission of the consumable item 20 in the image forming apparatus 10 will be described with reference to a flowchart shown in FIG. 7.

First, in step S11, the user mounts the consumable item 20 on the image forming apparatus 10.

Next, in step S12, the control unit 11 of the image forming apparatus 10 acquires the device information recorded in the memory 21 included in the consumable item 20 mounted on the image forming apparatus 10.

Next, in step S13, the control unit 11 acquires the device information connected to the image forming apparatus 10.

Next, in step S14, the control unit 11 determines whether or not the device information recorded in the memory 21 included in the consumable item 20 matches the device information of the device connected to the image forming apparatus 10.

In a case where it is determined that the both pieces of device information match in step S14, the control unit 11 permits the use of the consumable item 20 in step S15 and ends the process.

In a case where it is determined in step S14 that the both pieces of device information do not match, the control unit 11 displays a warning indicating that the consumable item 20 mounted on the image forming apparatus 10 is used in unauthorized manner in step S16.

Next, in step S17, the control unit 11 prohibits the use of the consumable item 20 and ends the process.

### [Modification Example]

Although the image forming apparatus 10 according to the exemplary embodiment of the present disclosure has been described above, the technology of the present disclosure is not limited to the exemplary embodiment and can be appropriately modified.

For example, the information processing system on which the consumable item is mounted is not limited to the image forming apparatus 10 and may be another system such as a personal computer.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

In the exemplary embodiments above, the term "processor" is broad enough to encompass one processor or plural processors in collaboration which are located physically apart from each other but may work cooperatively. The order of operations of the processor is not limited to one described in the exemplary embodiments above, and may be changed.

In addition, in the technology of the present disclosure, the system includes both a system configured with a plurality of devices and a system configured with a single device.

In addition, the technology of the present disclosure can also be applied to a program and a program product.

### [Supplementary Note]

Regarding the above-described exemplary embodiments, the following supplementary notes will be further disclosed.
(((1))) An information processing system comprising:
   a processor configured to:
   acquire device information of a device connected to the information processing system;
   acquire device information recorded in a recording unit included in a mounted consumable item; and
   permit use of the consumable item in a case where the device information recorded in the recording unit included in the consumable item matches the device information of the device connected to the information processing system.
(((2))) The information processing system according to (((1))) wherein the processor is configured to:
   prohibit the use of the consumable item in a case where the device information recorded in the recording unit included in the consumable item does not match the device information of the device connected to the information processing system.
(((3))) The information processing system according to ((1)) or ((2)), wherein the processor is configured to:
   in a case where a plurality of pieces of the device information are recorded in the recording unit included in the consumable item, permit the use of the consumable item in a case where at least one piece of the device information matches between a plurality of pieces of the device information recorded in the recording unit included in the consumable item and device information of a plurality of devices connected to the information processing system.
(((4))) The information processing system according to ((1)) or ((2)), wherein the processor is configured to:
   in a case where a plurality of pieces of the device information are recorded in the recording unit included in the consumable item, permit the use of the consumable item in a case where all of a plurality of pieces of the device information recorded in the recording unit included in the consumable item and device information of a plurality of devices connected to the information processing system match each other.
(((5))) The information processing system according to any one of (((1))) to (((4))) wherein the processor is configured to:
   record the device information of the device connected to the information processing system in the recording unit included in the consumable item by an operation of a manager user having authority to manage the consumable item.
(((6))) The information processing system described in ((5)), wherein the processor is configured to:
   in a case where a plurality of devices connected to the information processing system are present, record device information of a device selected by the manager user from among the plurality of devices connected to the information processing system in the recording unit included in the consumable item.
(((7))) The information processing system described in (((5))) wherein the processor is configured to:
   in a case where a plurality of devices connected to the information processing system are present, record device information of a device randomly selected from among the plurality of devices connected to the information processing system in the recording unit included in the consumable item.
(((8))) The information processing system according to any one of (((1))) to (((7))), wherein the processor is configured to:
   acquire device information of an external device connected to the information processing system in a wired or wireless manner.
(((9))) The information processing system according to (((8))),
   wherein the external device is any device of a router apparatus, a beacon, a USB-connected device, or a personal computer.
(((10))) A program causing a computer to execute a process comprising:
   acquiring device information of a device connected to the information processing system;
   acquiring device information recorded in a recording unit included in a mounted consumable item; and
   permitting use of the consumable item in a case where the device information recorded in the recording unit included in the consumable item matches the device information of the device connected to the information processing system.

The effects of the configuration of the supplementary notes will be described below.

With the information processing system according to (((1))), it is possible to prevent the unauthorized use of the mounted consumable item.

With the information processing system according to (((2))), it is possible to prevent the unauthorized use of the mounted consumable item.

With the information processing system according to (((3))), it is possible to easily permit the use of the consumable item in a case where all of the plurality of pieces of device information recorded in the recording unit included in the consumable item and the device information of the plurality of devices connected to the information processing system match each other, as compared with a case where the use of the consumable item is permitted.

With the information processing system according to (((4))), it is possible to improve the reliability of preventing the unauthorized use, as compared with a case where the use of the consumable item is permitted in a case where at least one or more pieces of device information match between the plurality of pieces of device information recorded in the recording unit included in the consumable item and the device information of the plurality of pieces of device connected to the information processing system.

With the information processing system according to (((5))), the consumable item can be made to correspond to the information processing system.

With the information processing system according to (((6))), it is possible to easily permit the use of the consumable item, as compared with a case where the device information of the device randomly selected from the plurality of devices connected to the information processing system is recorded in the recording unit included in the consumable item.

With the information processing system according to (((7))), it is possible to improve the reliability of preventing the unauthorized use, as compared with a case where the recording unit included in the consumable item records the device information of the device selected by the user from among the plurality of devices connected to the information processing system.

With the information processing system according to (((8))), it is possible to prevent the unauthorized use of the mounted consumable item by using a peripheral device on which the information processing system is mounted.

With the information processing system according to (((9))), it is possible to prevent the unauthorized use of the mounted consumable item by using a device possessed by the user.

With the program according to (((10))), it is possible to prevent the unauthorized use of the mounted consumable item.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

- 10:: image forming apparatus
- 11:: control unit
- 11a:: processor
- 11b:: memory
- 11c:: storage unit
- 12:: communication interface
- 13:: user interface device
- 14:: print engine
- 15:: scanner
- 16:: control bus
- 20:: consumable item
- 21:: memory

## Claims

1. An information processing system comprising:
a processor configured to:
acquire device information of a device connected to the information processing system;
acquire device information recorded in a recording unit included in a mounted consumable item; and
permit use of the consumable item in a case where the device information recorded in the recording unit included in the consumable item matches the device information of the device connected to the information processing system.

2. The information processing system according to claim 1, wherein the processor is configured to:
prohibit the use of the consumable item in a case where the device information recorded in the recording unit included in the consumable item does not match the device information of the device connected to the information processing system.

3. The information processing system according to claim 1 or 2, wherein the processor is configured to:
in a case where a plurality of pieces of the device information are recorded in the recording unit included in the consumable item, permit the use of the consumable item in a case where at least one piece of the device information matches between a plurality of pieces of the device information recorded in the recording unit included in the consumable item and device information of a plurality of devices connected to the information processing system.

4. The information processing system according to claim 1 or 2, wherein the processor is configured to:
in a case where a plurality of pieces of the device information are recorded in the recording unit included in the consumable item, permit the use of the consumable item in a case where all of a plurality of pieces of the device information recorded in the recording unit included in the consumable item and device information of a plurality of devices connected to the information processing system match each other.

5. The information processing system according to any one of claims 1 to 4, wherein the processor is configured to:
record the device information of the device connected to the information processing system in the recording unit included in the consumable item by an operation of a manager user having authority to manage the consumable item.

6. The information processing system according to claim 5, wherein the processor is configured to:
in a case where a plurality of devices connected to the information processing system are present, record device information of a device selected by the manager user from among the plurality of devices connected to the information processing system in the recording unit included in the consumable item.

7. The information processing system according to claim 5, wherein the processor is configured to:
in a case where a plurality of devices connected to the information processing system are present, record device information of a device randomly selected from among the plurality of devices connected to the information processing system in the recording unit included in the consumable item.

8. The information processing system according to any one of claims 1 to 7, wherein the processor is configured to:
acquire device information of an external device connected to the information processing system in a wired or wireless manner.

9. The information processing system according to claim 8,
wherein the external device is any device of a router apparatus, a beacon, a USB-connected device, or a personal computer.

10. A program causing a computer to execute a process comprising:
acquiring device information of a device connected to the information processing system;
acquiring device information recorded in a recording unit included in a mounted consumable item; and
permitting use of the consumable item in a case where the device information recorded in the recording unit included in the consumable item matches the device information of the device connected to the information processing system.

11. An information processing method comprising:
acquiring device information of a device connected to the information processing system;
acquiring device information recorded in a recording unit included in a mounted consumable item; and
permitting use of the consumable item in a case where the device information recorded in the recording unit included in the consumable item matches the device information of the device connected to the information processing system.
